# EUROPEAN PATENT APPLICATION

(11) **EP 2 583 546 A1**
(43) Date of publication of application: **24.04.2013**
(21) Application number: 12188932.3
(22) Date of filing: 18.10.2012
(51) Int. Cl.: A01G 9/12, A01G 17/00

(54) **Method and assembly for growing a hedge section displaceable as one whole, a displaceable hedge section and hedge**

(30) Priority: 19.10.2011 NL 2007616
(71) Applicant: Hebing, Hermanus Wilhelmus Albertus, 6644 BT Ewijk (NL)
(72) Inventor: Hebing, Hermanus Wilhelmus Albertus, 6644 BT Ewijk (NL)
(74) Representative: Janssen, Paulus J. P.

(57) **Abstract**

The present invention relates to a method and assembly (1) for growing a hedge section displaceable as one whole. The present invention also relates to a hedge section displaceable as one whole and a hedge formed with it.

According to the invention the growing process takes place in two stages. During a first growing stage the plants (3) are grown in separate containers (4). The plants are then grown further during a second growing stage whilst the plants are guided by a guide element (2). This forms a hedge section displaceable as one whole.

## Description

The present invention relates to a method and assembly for growing a hedge section as one displaceable whole. The present invention also relates to a hedge section displaceable as one whole and the hedge formed with it.

Such a system and method are known from the European patent application EP 00942534. EP 00942534. The prior art system comprises a guide element in the form of a mesh structure which is provided on the bottom of a tray. This tray is lined with a biodegradable material. A growing medium is placed in the lined tray. A multiplicity of plants is then grown in the tray. These plants are guided by the guide element to form a hedge section.

The tray consists of a structure with openings through which the growing medium is able to drop down. However, this is prevented by the biodegradable lining. In this case the biodegradable lining is selected so that the roots of the plant are able to grow through the lining.

Whilst the plants are growing the tray is not placed in soil or any other type of growing medium. This ensures that the roots of the plants will not grow outside the lining.

After the plants have grown to a height which is acceptable to the customer, the tray, guide element and the plants guided through can all be placed as one whole into a second growing medium. The roots will then grow outside the tray. The degradability of the lining is chosen so that the lining prevents the growing medium from falling through the mesh structure during the time in which the tray is not placed in the second growing medium, but degrades sufficiently quickly after the tray is placed in the second growing medium.

The above system offers the purchaser of the hedge section the advantage that an adjoining hedge can easily be formed by placing a multiplicity of hedge sections in the medium.

However, it was applicant's recognition that the above system has disadvantages for the grower of the hedge sections. In the method of prior art the plants are grown to a certain required height, starting directly from the tray coupled to the guide element. In other words, the seed, seedling, stripling, graft or cutting is placed directly into the tray. In the growing of large numbers of hedge sections the presence of the guide element results in a less efficient use of space for the grower when compared to regular cultivation on standard beds. The yield, in terms of plant per square metre, is lower because of the space occupied by the tray and guide element. Applicant further recognised that the use of the tray makes mechanical planting with regular equipment available on the market, such as a potting machine, difficult. Such a machine would have to be adapted to the type of tray used in the prior art method. Another solution would be to purchase a separate device for planting in addition to the above-mentioned regular equipment, or simply to plant the seedlings or small plants by hand. A complicating factor here is that growers have available only a short period each year for planting, for example 1 to 2 months. Consequently there is a continuous need to be able to plant new seeds, seedlings, striplings, grafts or cuttings quickly, with as optimum a use of the available area and climate as possible.

The object of the present invention is to provide a solution to mitigate to at least some of the problems outlined above.

This object is achieved by means of a method as defined in Claim 1, where it is noted that the term plant, in the context of the present invention, is understood to refer, among other things, to plants, trees, flowers, shrubs, climbing plants, hedge plants and fruit crops. It is also noted that the term hedge must be interpreted as a tight package of plants which are preferably mutually intertwined and/or grown together in a transverse direction.

According to the invention the method comprises providing multiple distinct containers filled with a first growth medium (of which the composition may be different between containers, for example to adapt to a situation wherein plants of different variety are used for the hedge section), each container comprising a plant (for example derived from a seed, seedling, stripling, graft or cutting) which in a first growing step is grown until a predetermined height. The method according to the invention also involves providing a guide element (which may be any element that is essentially of unit construction at least in lateral direction, i.e. in the direction perpendicular to the growth direction of the plants; it may be assembled from different parts, rigidly connected such that the element, at least in lateral direction, mechanically appears as one single element), bringing the multiple distinct containers in operative connection (i.e. in a working relationship, not necessarily mechanically connected) with the guide element, and allowing the plants to grow during a second growing stage by guiding the plants along the guide element, where the plants intertwine and/or grow together with the guide element such that the combination of the multiple distinct containers, the guide element and the plants form the hedge section.

According to the invention there are therefore two growing stages, in contrast to the method of prior art. During the first growing stage the emphasis is placed on allowing the plant to grow as quickly and efficiently as possible from the seed, seedling, stripling, cutting and/or the graft until it has reached a sufficient height for it to be guided by a guide element. The first growing stage preferably takes place in a regular container such as a pot. This enables the planting of the seed, seedling, stripling, cutting and/or graft to be automated with already known and commonly used equipment such as a potting machine. The use of such containers, particularly pots or pot-shaped containers, enables the plants to be grown in a tightly packed arrangement. As a result the yield to be achieved per square metre is greater than in the earlier mentioned device of prior art. After or even during the first growing stage, the plants may be re-potted to a pot which better first the following stages of the growth process.

In the second growing stage use is made of a guide element for guiding the plants. The guidance may in this case be active when the grower couples the plants to the guide element, for example by twining, or of passive when the plants intertwine and/or grow together in the guide element.

In contrast to the earlier mentioned prior art device, use is preferably made not of a single tray with a lining, but of multiple distinct containers. A distinction is also made between an initial growing phase, the first growing stage, in which the plant should reach a certain height, and a second growing stage in which the plants are guided by a guide element. This division into two growing stages should enable the grower to carry this out in different sites, in particular carrying out the first growing stage remotely from the guide element (for example in a common nursery cultivation bed, remote from the site where the plants are grown to form the hedge section). Another possibility provided by the present invention is for the grower to purchase plants which have already undergone the first growing stage.

It is preferable for the containers not to come into contact, or to hardly come into contact with a growing medium on one outer side during the first growing stage. This prevents the roots from growing outside the container.

It is also preferable for the containers not to come into contact, or to hardly come into contact with a growing medium on the outer side during the second growing stage. If, both during the first and second growing stages, the containers do not come into contact with a growing medium on the outside, a multiplicity of guided plants is created in the form of a hedge section whose root growth is confined to the preferably biodegradable containers. This facilitates the planting of the hedge section, in the soil, for example. If a biodegradable container is used it will degrade in time after the hedge section has been planted. This enables the hedge section to grow further and become firmly attached in the soil, for example. If the container does not consist of biodegradable material, it should be removed in most cases prior to planting of the hedge section. For some plants this may be difficult because of the root growth. Moreover, the roots already present may be damaged by the removal of the containers. These problems are not encountered or hardly ever encountered if biodegradable containers are used. However, the present invention does not preclude the use of non-biodegradable containers. Moreover for some plants, a climber for example, the removal of the containers causes no problems at all for the plants as such.

It is advantageous for the guide element to have a mesh structure which extends preferably vertically when the hedge section is in use, for example for growing the plants or for actually forming a hedge at an end user's property. It should be clear that the present invention is not limited to allowing plants to grow vertically only. Allowing the plant to grow in a controlled manner in a certain direction or in certain directions also falls within the scope of the present invention.

The use of a mesh structure is advantageous because such a structure has a multiplicity of openings which enable the plant to be easily intertwined and/or grow together in the guide element. The intertwining and/or growing together of the plant in the guide element may take place actively because the grower couples the plants to the guide element, e.g. by means of a fastening device such as a plastic band, for example in the transition between the first growth stage and the second growth stage.

It is possible to position the guide element and the aforementioned multiplicity of containers mutually in such a manner as to enable the aforementioned multiplicity of plants to be intertwined and/or grow together with the guide element. A possible arrangement for this comprises a frame or a ceiling from which the guide element is vertically suspended. The containers are then brought into close proximity with the guide element for the second growing stage. However, the containers can already be brought into this position during or before the first growing stage.

In the above example the containers need not be coupled to the guide element. However, it is also possible to couple the aforementioned multiplicity of separate containers to the guide element after the first growing stage. This is possible, for example, because the guide element is provided adjacent a bottom side (e.g. at the underside itself) of the same with coupling means. This makes it possible to couple each container with the coupling means.

As previously mentioned the use of pots provides the possibility of carrying out the first growing stage by potting the multiplicity of plants in the aforementioned multiplicity of containers using a potting machine.

After the second growing stage the guide element, plants and containers can all be planted in a second growing medium, such as soil and/or potting compost, to allow the hedge section to continue growing. This stage is in most cases carried out on the premises of a customer of the grower of the hedge section, for it is more efficient if, just before planting, the root growth does not extend much beyond the outside of the container. This provides on the one hand for ease of planting and on the other prevents damage to the roots.

A hedge can be formed by planting a multiplicity of hedge sections next to each other in the second growing medium, thus enabling the customer to enjoy the formation of a garden almost immediately, for example.

According to a second embodiment of the present invention, the object of the invention is also achieved with an assembly such as that defined in Claim 9. This assembly comprises a guide element which, adjacent a bottom side (e.g. on one underside) thereof, is provided with coupling means as well as a multiplicity of separate containers (i.e. multiple distinct containers) which are filled with a first growing medium and which are coupled to the guide element by means of the coupling means. Coupling means could for example be tie-ribs, simple metal or plastic wire, tape, cord, or a mesh structure of wire corresponding to the size of the corresponding container. The assembly also comprises a multiplicity of plants, for example deriving from a seed, seedling, stripling, graft or cutting, laced in the multiplicity of containers.

The guide element is preferably in the form of a mesh structure and comprises, for example, a steel mat and/or concrete gauze.

It is advantageous for such a steel mat and/or concrete gauze to be provided on one underside thereof with a support for placing the guide element and allowing it to be supported on a base. In so doing little or no external support is required for the guide element.

The steel mat and/or concrete gauze can be provided adjacent the bottom side (e.g. on the underside) with a first plate-like structure (which can also be called "a plate") extending in principle horizontally, at least in the growing condition, which horizontal plate-like structure comprises the coupling means in the form of a multiplicity of adjacent openings, where a dimension of each of the multiplicity of openings is matched to a diameter of the containers so that the multiplicity of containers can be placed in the multiplicity of openings, each container being supported on a wall of the opening in which the container is placed. One example of such a system is a tapering container which clamps between the wall(s) of the opening with its thicker side, such as the upper edge. Another possibility is for the container to be provided with a supporting edge which, after the container is placed in the opening, rests on the wall(s) of the opening. In this case it is advantageous for each container to be able to rest against the wall or walls of the opening in which the container is placed at at least two opposing points on the wall. Support at two points prevents or reduces the risk of overturning of the container.

The steel mat and/or the concrete gauze may also comprise, on one underside thereof, a second plate-like structure (or "plate") running parallel to the first plate, which second plate is also provided with a multiplicity of adjacent openings, the openings of the first and second plates being aligned in a vertical direction. In this case the mutual distance between the first and second plates may be such the container, after being placed, projects through an opening of both the first and second plate. The container can also be supported by both plates.

In another embodiment the steel mat and/or concrete gauze also comprises, on one underside thereof, a second plate running parallel with the first plate, where, when assembled, a container placed in the opening of the first plate rests on one end of the second plate. After the container is placed it therefore rests on one end of the second plate, which in turn rests on a base. In this case the weight of the multiplicity containers therefore ensures stable fixing of the guide element.

The above-mentioned first and second plates of the steel mat and/or concrete gauze may be manufactured separately and are fastening to the remaining part of the guide element by means of a loading technique, for example, or by the use of clamps. However, it is preferable to form these plates, and the coupling means generally, by bending or folding the steel mat and/or concrete gauze. It should be clear to the person skilled in the art that repeated bending or folding may be necessary to obtain a certain shape of the coupling means.

The guide element preferably comprises a flat-shaped element along which the plants are allowed to slide or are guided in a first direction. In this case the coupling means can be made symmetrical relative to the flat-shaped element mentioned, thus enabling plants to grow on at least two sides of the guide element.

The biodegradable container preferably comprises a container manufactured using a material selected from the group consisting of potato starch, vegetable oil, coconut fibres, cow dung, fibres, cellulose, rice chaff, polylactic acid, peat and chicken feathers.

The first and/or second growing medium preferably comprises a growing medium selected from the group consisting of soil, potting compost, rock wool, coconut fibrs and bark.

The invention also provides for a guide element designed as the guide element described above, the plants being intertwined and/or growing together with the guide element so that the combination of the guide element, the multiplicity of containers and the plants forms a hedge section which is displaceable as one whole. Finally, the invention provides for a hedge comprising a multiplicity of the aforementioned hedge sections placed adjacent to each other in a second growing medium.

The present invention will be discussed in more detail in the above with reference to the attached figures, identical reference numbers being used for indicating identical or comparable parts or components, and where:
Figure 1 shows a front elevation of an assembly according to the invention;
Figure 2 shows a perspective side view of the assembly shown in Figure 1;
Figures 3A-3E show diagrammatic side views of variants on the guide element shown in Figure 1;
Figure 4 shows a view preceding the first growing stage;
Figure 5 shows a view after the first growing stage;
Figure 6 shows a view preceding the second growing stage; and
Figure 7 shows a view of the assembly after the second growing stage.

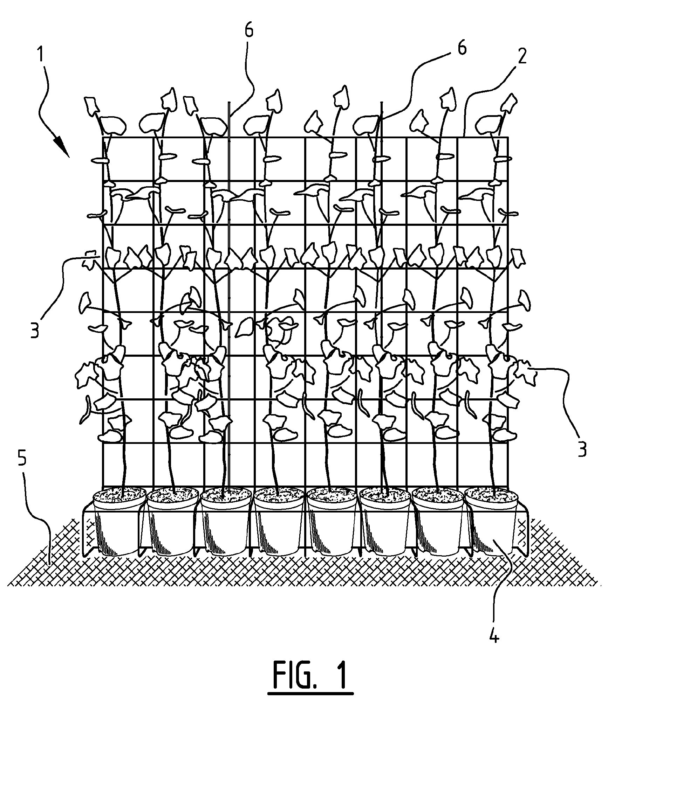

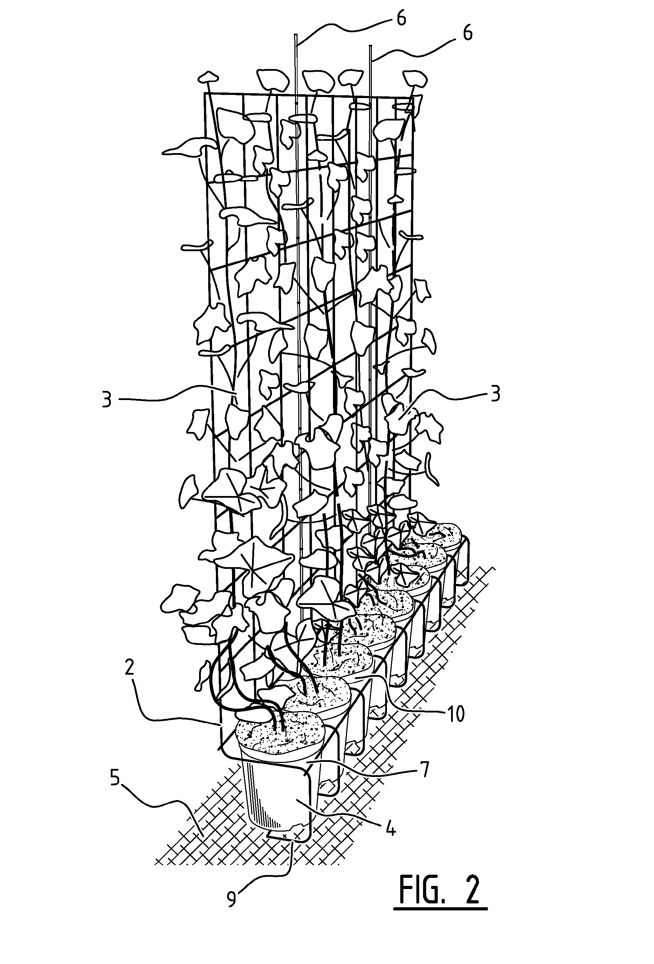

An embodiment of assembly 1 according to the present invention is shown in Figures 1 and 2. Here a guide element 2 is visible in the form of a mesh structure which comprises a multiplicity of openings. These openings enable plants 3 to intertwine and/or grow together with guide element 2. In this case plants 3 grow from a container in the form of a biodegradable pot 4. Bamboo sticks 6 are incorporated in guide element 2 for further reinforcement.

The side view in Figure 2 shows how guide element 2 is provided on the underside with a first horizontally extending plate 7 which has a multiplicity of openings. Plate 7 runs via a vertical section 8 into a second horizontally extending plate 9. As shown in Figure 2, containers 4 rest on one end of plate 9, which itself rests on base 5.

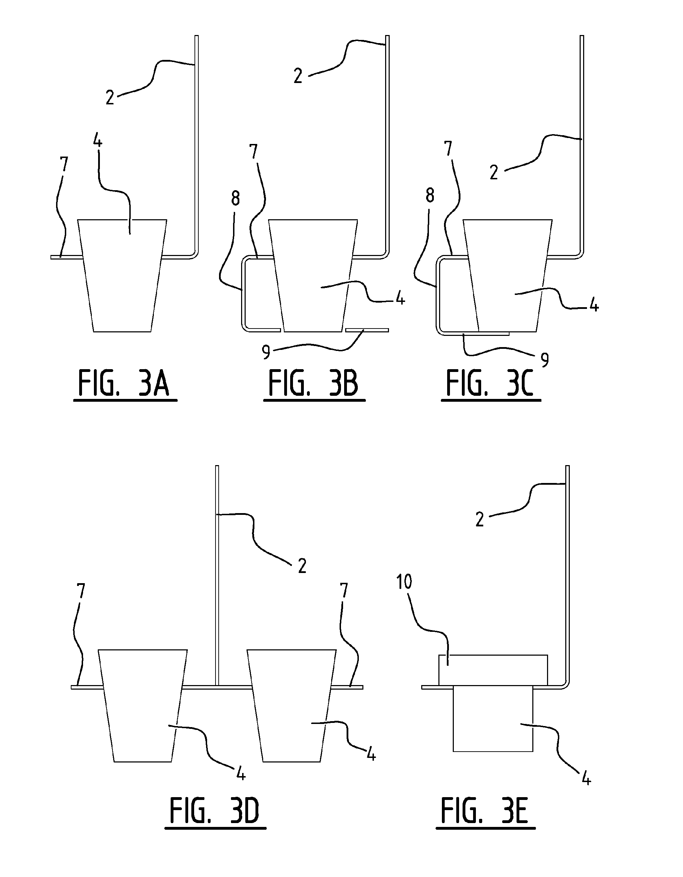

It is also shown in Figure 2 that containers 4 are provided on one underside with a supporting edge 10, see also Figure 3E, for example, with which containers 4 rest on the wire elements around the openings in first plate 7. Containers 4 preferably rest on a front and rear side against the wire elements since the support on the other sides is made difficult by nearby containers 4.

Figures 3A-3E show alternatives of guide element 2, where only a diagrammatic side view is represented. Thus guide element 2 shown in Figure 3A is provided with a first plate 7. This guide element can, for example, be suspended from a ceiling or frame. The design shown in Figure 3B can be placed on a base, in which case a second plate 9 will rest on the base. This also applies to the variant shown in Figure 3C, which corresponds to guide element 2 shown in Figures 1 and 2.

The embodiment in Figure 3D shows a symmetrical arrangement. Here the coupling means, i.e. in this case the first plates 7, are positioned symmetrically in relation to the vertically extending central section. This enables a hedge section to be obtained with a double thickness and/or greater density.

The embodiment in Figure 3E shows a container 4 with a supporting edge 10 with which container 4 rests in an opening of first plate 7, as shown earlier in Figures 1 and 2.

It is clear from all the embodiments that the shape and/or dimension of the container and the openings in the mesh structure are adapted to each other.

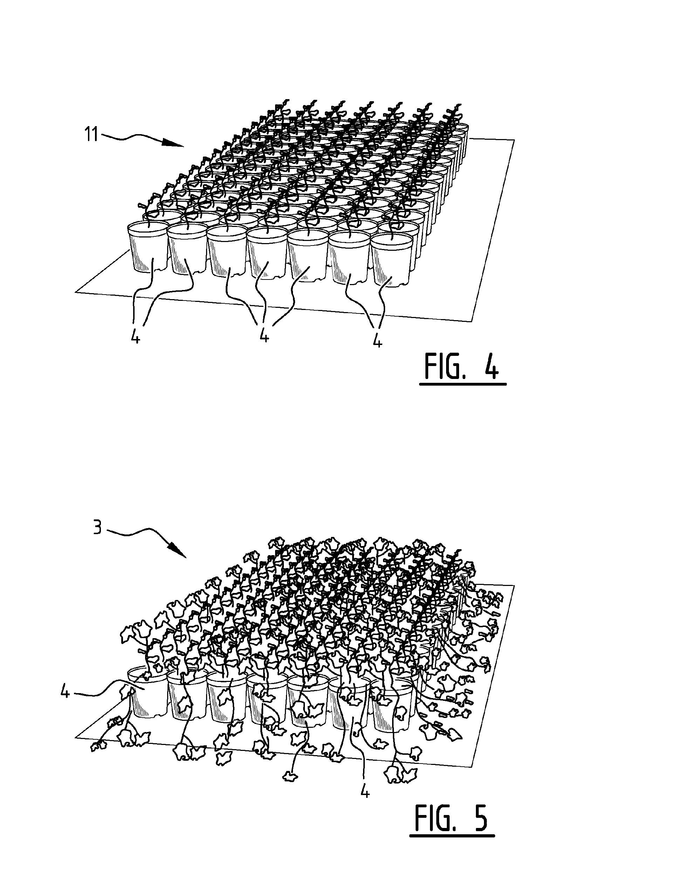

Figure 4 shows a view of the assembly prior to the first growing stage. Here cuttings 11 are placed neatly in containers 4. In this case containers 4 are tightly packed so that optimum use can be made of the available soil area. Here a prior art potting machine can be used for planting cuttings 11 in containers 4.

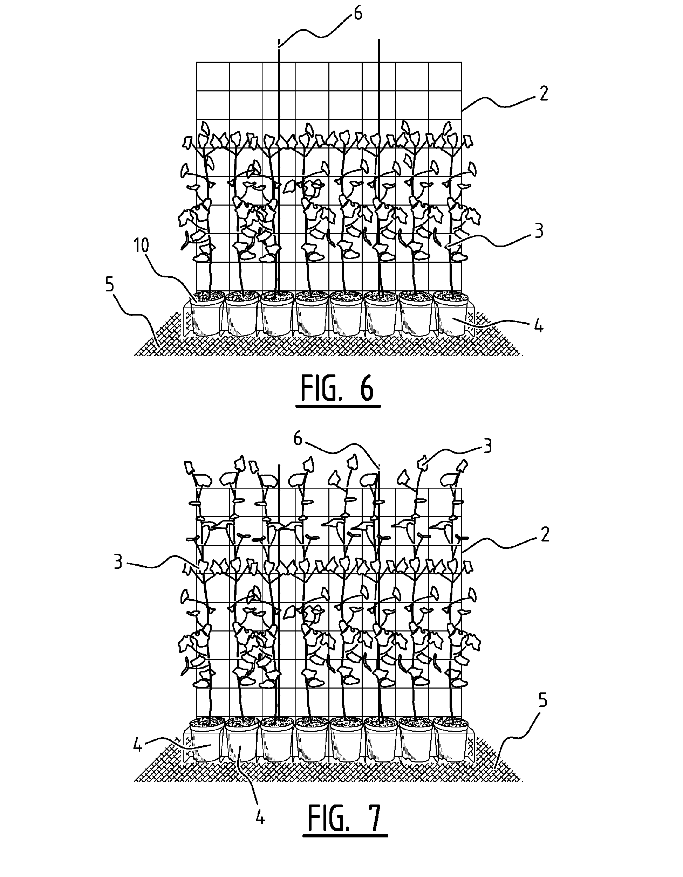

Figure 5 shows a view of the assembly after the first growing stage. Here plants 3 have grown slightly. In this stage plants 3 are placed in a guide element 2 and/or are coupled to it. After placing, plants 3 may intertwine and/or be intertwined and/or may grow together in the mesh structure of guide element 2. This leads to the situation shown in Figure 6. The hedge section can then grow to a desired height, as shown in Figure 7.

The hedge section shown in Figure 7 may be transferred as one whole and planted in a second growing medium, such as soil. It is noted that hardly any or no components of the hedge section should be removed in this embodiment of the invention because the containers 4 used are biodegradable. After placing in the soil, containers 4 will degrade in time. This ensures that the hedge section is anchored in the growing medium and promotes the growth of the hedge section.

It should be clear to the person skilled in the art that various modifications are possible to the embodiments described above without deviating from the degree of protection defined by the attached claims.

## Claims

1. A method for growing a hedge section displaceable as one whole, comprising:
providing multiple distinct containers filled with a first growth medium, each container comprising a plant which in a first growing step is grown until a predetermined height;
providing a guide element;
bringing the multiple distinct containers in operative connection with the guide element;
allowing plants to grow during a second growing stage by guiding the plants along the guide element, wherein the plants intertwine and/or grow together with the guide element such that the combination of the multiple distinct containers, the guide element and the plants form the hedge section.

2. The method according to Claim 1, wherein the first growing stage takes place remotely from the guide element.

3. The method according to any one of the preceding claims, wherein the guide element has a mesh structure which extends preferably vertically when the hedge section is in use as a hedge.

4. The method according to Claim 3 further comprising the coupling to the mesh structure of the multiplicity of plants, for example by twining them, in the transition between the first growing stage and the second growing stage.

5. The method according to any one of the preceding claims, further comprising the mutual positioning of the guide element and the aforementioned multiplicity of containers to enable the aforementioned multiplicity of plants to be intertwined and/or to grow together with the guide element.

6. The method according to any one of the preceding claims, further comprising the coupling, after the first growing stage, of the aforementioned multiplicity of separate containers to the guide element.

7. The method according to Claim 6, wherein the guide element is provided, adjacent a bottom side thereof, with coupling means and wherein the aforementioned coupling of the multiplicity of separate containers to the guide element involves the coupling of each of the multiplicity of containers with the coupling means.

8. The method according to any one of the preceding claims, wherein the first growing phase involves the potting, by means of a potting machine, of a multiplicity of plants in the aforementioned multiplicity of containers.

9. An assembly for forming a hedge section displaceable as one whole, comprising:
a guide element which is provided adjacent a bottom side thereof with coupling means;
a multiplicity of separate containers which are filled with a first growing medium and which are coupled to the guide element by means of the coupling means;
a multiplicity of plants placed in the multiplicity of containers.

10. The assembly according to Claim 9, wherein the guide element is in the form of a mesh structure.

11. The assembly according to Claim 10, wherein the guide element is provided adjacent a bottom side with in principle a first horizontally extending plate-like structure, at least in the condition of use, which horizontal plate-like structure comprises the coupling means in the form of a multiplicity of adjacent openings matched to the diameter of the containers, so that the multiplicity of containers can be placed in the multiplicity of openings, wherein each container rests on a wall of the opening in which the container is placed.

12. The assembly according to any one of Claims 9-11, wherein the container is manufactured using a material selected from the group consisting of potato starch, vegetable oil, coconut fibres, cow dung, fibres, cellulose, rice chaff, polylactic acid, peat and chicken feathers.

13. The assembly according to any one of Claims 9-12, wherein the first and/or second growing medium comprises a growing medium selected from the group consisting of soil, potting compost, rock wool, coconut fibres and bark.

14. A hedge section displaceable as one whole, comprising the assembly according to any one of Claims 9-13, wherein the plants are intertwined and/or grown together with the guide element so that the combination of the guide element, the multiplicity of containers and the plants forms a hedge section displaceable as one whole.

15. A hedge, comprising a multiplicity of adjacent hedge sections as defined in Claim 14, placed in a second growing medium.
